# EUROPÄISCHE PATENTSCHRIFT

(11) **EP 1 637 759 B1**
(45) Veröffentlichungstag und Bekanntmachung des Hinweises auf die Patenterteilung: **17.10.2007**
(21) Anmeldenummer: 05019013.1
(22) Anmeldetag: 01.09.2005
(51) Int. Cl.: F16D 55/22, F16D 55/224, F16D 55/226, F16D 65/00, F16D 65/095, F16D 65/097

(54) **Druckplatte**
Pressure plate
Plateau de pression

(30) Priorität: 17.09.2004 DE 102004045222
(43) Veröffentlichungstag der Anmeldung: 22.03.2006
(73) Patentinhaber: Wabco Radbremsen GmbH, 68229 Mannheim (DE)
(72) Erfinder: Antony, Paul, 67550 Worms (DE); Falter, Wolfgang, 69118 Heidelberg (DE); Kloos, Eugen, 64625 Bensheim (DE); Beyer, Frank, 68239 Manheim (DE); Redemann, Bernward, 68766 Hockenheim (DE); Grosskopf, Ralf, 74931 Lobbach (DE)
(74) Vertreter: Leinweber & Zimmermann

(56) Entgegenhaltungen:
- EP-B- 0 641 949
- GB-A- 936 222
- US-A- 3 966 025
- US-A- 4 615 417

## Beschreibung

Die Erfindung betrifft eine Druckplatte zum Übertragen einer Zuspannkraft von einer Zuspanneinrichtung auf einen Bremsbelag einer Scheibenbremse, mit
einem Krafteinleitungsbereich, in dem die Zuspannkraft in die Druckplatte eingeleitet wird,
einem Kraftableitungsbereich, in dem die Zuspannkraft an den Bremsbelag abgeleitet wird, und
einer ersten Drehsicherungseinrichtung zum Sichern der Druckplatte gegen ein Mitdrehen mit der Bremsscheibe bei Vorwärtsbremsung.

Insbesondere bei Nutzfahrzeug-Scheibenbremsen wird mittels Zuspannung über eine relativ kleine Angriffsfläche der Zuspanneinrichtung eine große Kraftkomponente (Axial- bzw. Zuspannkraft senkrecht zur Ebene der Bremsscheibe) auf einen großflächigen zuspannseitigen Bremsbelag (bestehend aus Belag und Belagträger) eingeleitet. Dies gilt insbesondere für Einspindelzuspannungen, aber auch für Zweispindelzuspannungen im Hinblick auf diejenigen Druckteile, die auf den Bremsbelag einwirken.

Da der Belagträger nicht übermäßig dick und biegesteif ausgeführt werden darf, wird zwischen der Zuspanneinrichtung und dem Bremsbelag eine Druckplatte bzw. Druckverteilerplatte eingesetzt. Eine solche Druckplatte ist herkömmlicherweise entsprechend dick und massiv dimensioniert, um selbst biegesteif zu sein. Sie muß möglichst großflächig auf den Bremsbelag einwirken. Damit soll eine gleichmäßige und deformationsfreie Belaganlage an der Bremsscheibe erreicht werden. Die Druckplatte dient mithin dazu, nachteiligen Radial- und Tangentialverschleiß des Belages sowie Überhitzungen der Bremsscheibe durch ungleichmäßige Belaganlage zu vermeiden.

Der Bremsbelag selbst ist in einem Bremsenteil (Bremsenträger, Bremsenflansch) axial geführt und derart abgestützt, daß die Umfangskraft, welche aufgrund der Bremsreibung zwischen dem Bremsbelag und der Bremsscheibe in Umfangsrichtung der Bremsscheibe auf den Bremsbelag wirkt, von diesem über die Abstützflächen in das Bremsenteil (Achsteil) abgeleitet wird.

Die bei Vorwärtsbremsung wirkenden Umfangskräfte werden über die Haftreibung im Kraftableitungsbereich übertragen. Dadurch besteht die Gefahr, daß die Druckplatte im Sinne eines Mitdrehens mit der Bremsscheibe verschoben, verdreht oder gekippt wird. Dadurch kann sich eine nachteilige Schrägstellung ergeben.

Zur Lösung dieses Problems zeigt die EP 641 949 B eine "Zwangsentkopplung" zwischen der Druckplatte und dem Bremsbelag als Drehsicherungseinrichtung zum Sichern der Druckplatte gegen ein Mitdrehen mit der Bremsscheibe bei Vorwärtsbremsung. Dazu ist die Druckplatte auf der Bremsscheibeneinlaufseite mit einer Führungsleiste in eine Führungsnut des Bremsenträgers eingehängt. Von diesem Stand der Technik geht die Erfindung ausweislich des Oberbegriffs von Anspruch 1 aus. Da insbesondere bei großen Nutzfahrzeugbremsen mit entsprechend großen Bremsscheiben heutzutage lange Bremsbeläge eingesetzt werden, sind auch entsprechende Druckplattendimensionierungen erforderlich. Diese Druckplatten bestehen herkömmlicherweise aus Vollmaterial und sind entsprechend schwer. Zudem nehmen sie axialen Bauraum in Anspruch.

Es ist Aufgabe der Erfindung, die aus der EP 641 949 B bekannte Druckplatte derart weiterzuentwickeln, daß sie mit möglichst wenig Materialeinsatz auskommt, dennoch aber biegesteif ist und auch bei großen Bremsbelägen einen Schrägverschleiß wirkungsvoll verhindert. Insbesondere soll die Krafteinleitung verbessert werden. Schließlich soll die Druckplatte insbesondere bauraumsparend und gewichtsoptimiert sein.

Erfindungsgemäß wird die gestellte Aufgabe dadurch gelöst, daß die wirksame Hebellänge der ersten Drehsicherungseinrichtung parallel zur Bremsscheibenachse größer ist als der Abstand des Krafteinleitungsbereichs vom Kraftableitungsbereich parallel zur Bremsscheibenachse.

Durch die erfindungsgemäße Ausgestaltung der Druckplatte wird dem aus dem Abstand zwischen dem Krafteinleitungsbereich und dem Kraftableitungsbereich gebildeten Hebel ein verlängerter Hebelarm entgegengesetzt. Dadurch kann eine Selbstregelung des Gesamtsystems im Sinne einer Verringerung oder sogar Vermeidung von Schrägverschleiß erreicht werden. Dies ist insbesondere bei Druckplatten herkömmlicher Bauart zumindest dann nicht mehr der Fall, wenn die Druckplatten entsprechend den oben dargelegten gesteigerten Anforderungen dicker und länger werden, weil es dann durch nachteilige Hebelwirkungen zu einem Drehen bzw. Verkanten in der Druckplattenführung kommen könnte. Bei herkömmlichen Druckplatten, bei denen die wirksame Hebellänge der ersten Drehsicherungseinrichtung parallel zur Bremsscheibenachse nicht größer ist als der Abstand des Krafteinleitungsbereichs vom Kraftableitungsbereich parallel zur Bremsscheibenachse, ergibt sich nämlich ein großer Hebel, um den sich die Druckplatte bei Vorwärtsbremsung drehen will. Die erfindungsgemäße Ausgestaltung der Druckplatte erzeugt demgegenüber ein Gegenmoment, das dem oben beschriebenen Drehen bzw. Verkanten in der Druckplattenführung entgegenwirkt und Schrägverschleiß minimiert bzw. verhindert.

Zur weiteren Minimierung bzw. zur Verhinderung von Schrägverschleiß ist erfindungsgemäß besonders bevorzugt, daß die erste Drehsicherungseinrichtung bei Vorwärtsbremsung auf der Scheibeneinlaufseite liegt. Zur Meidung von Wiederholungen wird hinsichtlich dieses Merkmals auf die EP 641 949 B verwiesen.

Weiter bevorzugt weist die erste Drehsicherungseinrichtung eine ebene Führungsfläche auf, entlang derer die Druckplatte beim Bremsvorgang verschieblich ist.

Dabei kann vorgesehen sein, daß die Führungsfläche mit der Bremsscheibenachse einen spitzen Winkel bildet. Mit anderen Worten ist sie schräg gegen den Bremsscheibeneinlauf angestellt und dadurch gezogen. Dadurch ergeben sich erhebliche Vorteile. Es wird nämlich ein Gegenmoment erzeugt. Dies führt dazu, daß in Richtung auf den Kraftableitungsbereich eine größere Zuspannkraft geleitet wird. Dadurch wird ein Schrägverschleiß vermieden.

Erfindungsgemäß bevorzugt ist die Druckplatte in in die Bremse eingebautem Zustand in Richtung quer zur Bremsscheibenachse verschieblich. Die Druckplatte gleitet somit beim Bremsvorgang gegen die Drehrichtung der Bremsscheibe in Vorwärtsfahrt an der Zuspanneinrichtung vorbei. Diese "Entkopplung" bringt wiederum erhebliche Vorteile im Hinblick auf die Minimierung bzw. die Eliminierung eines Schrägverschleißes mit sich.

Nach einer besonders bevorzugten Ausführungsform der Erfindung ist die Druckplatte im Krafteinleitungsbereich dünner als in mindestens einem anderen Bereich. Dadurch kommt die Angriffsfläche der Zuspannkraft näher an den Kraftableitungsbereich heran, was zu einem entsprechend kürzeren Hebelarm führt und mithin das Regelverhalten der Druckplattenführung noch einmal verbessert. Darüber hinaus führt diese Ausführungsform der Erfindung zu einer axialen Bauraumverkürzung. Die oben erwähnte Biegesteifigkeit kann bei dieser Ausführungsform der Erfindung durch den "mindestens einen anderen Bereich" erreicht werden. Es ergibt sich also insgesamt eine Materialersparnis.

Bei dieser Ausgestaltung kann insbesondere im Hinblick auf die oben erwähnte Verschieblichkeit der Druckplatte die der Zuspanneinrichtung zugewandte Fläche des Krafteinleitungsbereichs größer als die an dem Krafteinleitungsbereich anliegende Fläche der Zuspanneinrichtung sein.

Erfindungsgemäß weiter bevorzugt ist die Dicke der Druckplatte in einem der ersten Drehsicherungseinrichtung unmittelbar benachbarten Bereich derart, daß die erste Drehsicherungseinrichtung in Richtung der Bremsscheibenachse auf der der Zuspanneinrichtung zugewandten Seite und/oder auf der dem Bremsbelag zugewandten Seite übersteht. Dies ist insbesondere im Hinblick auf den Hebelarm zur Erzeugung eines Gegenmoments zur Minimierung oder Eliminierung von Schrägverschleiß vorgesehen.

Erfindungsgemäß weiter bevorzugt kann eine Materialandickung in dem der ersten Drehsicherungseinrichtung unmittelbar benachbarten Bereich vorgesehen sein. Dies erhöht die Steifigkeit der ersten Drehsicherungseinrichtung, die insbesondere in Form einer Führungsleiste ausgebildet ist. Darüber hinaus wird die Kerbwirkung in diesem besonders hoch beanspruchten Bereich verringert.

Die erste Drehsicherungseinrichtung ist nach einer besonders bevorzugten Ausführungsform zumindest teilweise an einem Ansatz auf der der Zuspanneinrichtung zugewandten Seite ausgebildet.

Zusätzlich oder alternativ kann vorgesehen sein, daß die erste Drehsicherungseinrichtung zumindest teilweise an einem Ansatz auf der dem Bremsbelag zugewandten Seite ausgebildet ist.

Nach einer weiter bevorzugten Ausführungsform der Erfindung ist eine zweite Drehsicherungseinrichtung zum Sichern der Druckplatte gegen ein Mitdrehen mit der Bremsscheibe bei Rückwärtsbremsung vorgesehen, deren wirksame Hebellänge parallel zur Bremsscheibenachse kleiner als diejenige der ersten Drehsicherungseinrichtung ist. Bei dieser Ausgestaltung der Erfindung wird ein Verkanten/Verklemmen vermieden, weil die Reibung verringert ist.

Damit die Druckplatte trotz besonders "dünner" Ausführung beispielsweise insbesondere im Krafteinleitungsbereich die erforderliche Steifigkeit hat, ist erfindungsgemäß bevorzugt mindestens ein Versteifungsansatz auf der der Zuspanneinrichtung zugewandten Seite vorgesehen. Ein solcher Versteifungsansatz kann in der Draufsicht die Kontur der Seitenansicht eines Ambosses haben, wobei im Zentrum der Krafteinleitungsbereich ausgespart ist.

Erfindungsgemäß bevorzugt ist darüber hinaus eine dritte Drehsicherungseinrichtung zum Sichern der Zuspanneinrichtung gegen ein Verdrehen bezüglich der Druckplatte vorgesehen.

Die dritte Drehsicherungseinrichtung weist erfindungsgemäß bevorzugt eine Ausnehmung auf. ln eine solche Ausnehmung kann ein entsprechend ausgestaltetes Gegenelement der Zuspanneinrichtung als Verdrehsicherung eingreifen.

Die Ausnehmung ist bevorzugt länglich, damit die weiter oben beschriebene Verschieblichkeit der Druckplatte bezüglich der Zuspanneinrichtung gegeben ist, ohne ein Verklemmen zu riskieren.

Zusätzlich oder alternativ kann aber auch vorgesehen sein, daß die dritte Drehsicherungseinrichtung eine Begrenzung des Krafteinleitungsbereichs mit von der Kreisform abweichender Kontur aufweist. Mit anderen Worten wird nach dieser Ausgestaltung ein Formschluß realisiert, der zwar gegen ein Verdrehen wirkt, dennoch aber eine Querverschieblichkeit der Druckplatte bezüglich der Zuspanneinrichtung gewährleistet.

Neben der oben beschriebenen Druckplatte schafft die Erfindung auch eine Scheibenbremse mit einer solchen Druckplatte, insbesondere für Nutzfahrzeuge.

Dabei handelt es sich bei der erfindungsgemäßen Scheibenbremse bevorzugt um eine Einspindelbremse oder eine Zweispindelbremse.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine schematische Explosionsdarstellung von Einzelteilen einer Scheibenbremse,
- Figur 2: schematisch eine Bremsscheibe und ein Festteil der Bremse,
- Figur 3: eine Ansicht einer bevorzugten Ausführungsform der erfindungsgemäßen Druckplatte von der bremsscheibenzugewandten Seite aus,
- Figur 4: eine Ansicht der Druckplatte nach Figur 3, jedoch von der bremsscheibenabgewandten Seite gesehen,
- Figur 5: eine Teilansicht der Druckplatte nach den Figuren 3 und 4 von unten und
- Figur 6: die gleiche Ansicht wie Figur 5, jedoch von einem anderen Ausführungsbeispiel der erfindungsgemäßen Druckplatte.

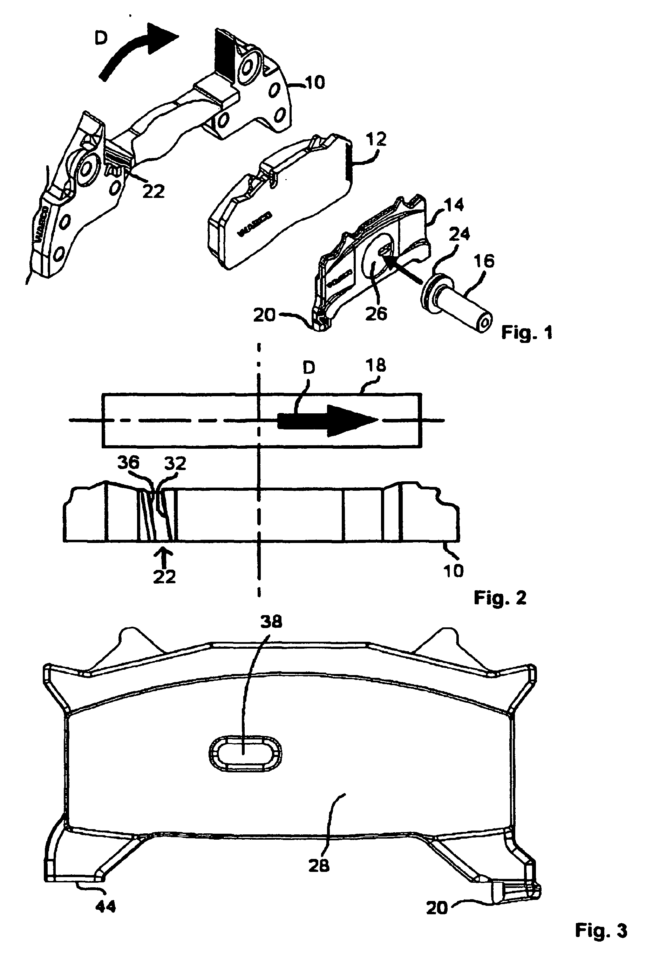

Figur 1 zeigt Teile einer Scheibenbremse, nämlich einen Bremsenträger 10, einen Bremsbelag 12, eine Druckplatte 14 sowie ein Zuspannelement 16. Die Druckplatte 14 ist auf der Bremsscheibeneinlaufseite (vgl. Drehrichtung D der Bremsscheibe 18) mit einem Stützfuß 20 in eine Schrägnut 22 in den Bremsenträger 10 eingehängt. Die Schrägnut 22 bildet mit der Drehachse der Bremsscheibe 18 einen spitzen Winkel gegen den Bremsscheibeneinlauf. Der Stützfuß 20 bildet zusammen mit der Schrägnut 22 eine erste Drehsicherungseinrichtung. Die genannten Elemente verhindern nämlich, daß sich die Druckplatte beim Bremsen mit der Bremsscheibe 18 mitdreht, verschoben wird und/oder kippt. Die eingehängte Druckplatte 14 wird somit gezogen.

Das Zuspannelement 16 drückt mit einer Stirnseite 24 gegen einen Krafteinleitungsbereich 26 auf der bremsscheibenabgewandten Seite der Druckplatte 14. Auf der bremsscheibenzugewandten Seite (Figur 3) liegt die Druckplatte 14 vollflächig an dem Bremsbelag 12 an. Die an dem Bremsbelag 12 anliegende Fläche stellt einen Kraftableitungsbereich 28 dar, weil über diesen Bereich die von dem Zuspannelement 16 ausgeübte Kraft an den Bremsbelag 12 abgeleitet wird.

Die wirksame Hebellänge L des als Drehsicherungseinrichtung dienenden Stützfußes parallel zur Bremsscheibenachse ist größer als der Axialabstand des Krafteinleitungsbereichs 26 zum Kraftableitungsbereich 28. Dadurch ergeben sich die oben genannten Vorteile hinsichtlich der Verringerung von Schrägverschleiß.

Bei Vorwärtsbremsung liegt der Stützfuß 20 mit einer Führungsfläche 30 an einer Führungsfläche 32 des Bremsenträgers 10 an.

Bei Rückwärtsbremsung liegt der Stützfuß 20 mit einer Führungsfläche 34 an einer Führungsfläche 36 der Schrägnut 22 an. Während die axiale Hebellänge der Führungsfläche 30 besonders groß ist, und zwar insbesondere größer als der Abstand des Krafteinleitungsbereichs 26 vom Kraftableitungsbereich 28, ist die Führungsfläche 34 kürzer ausgestaltet, dadurch wird ein VerkantenNerklemmen zuverlässig vermieden.

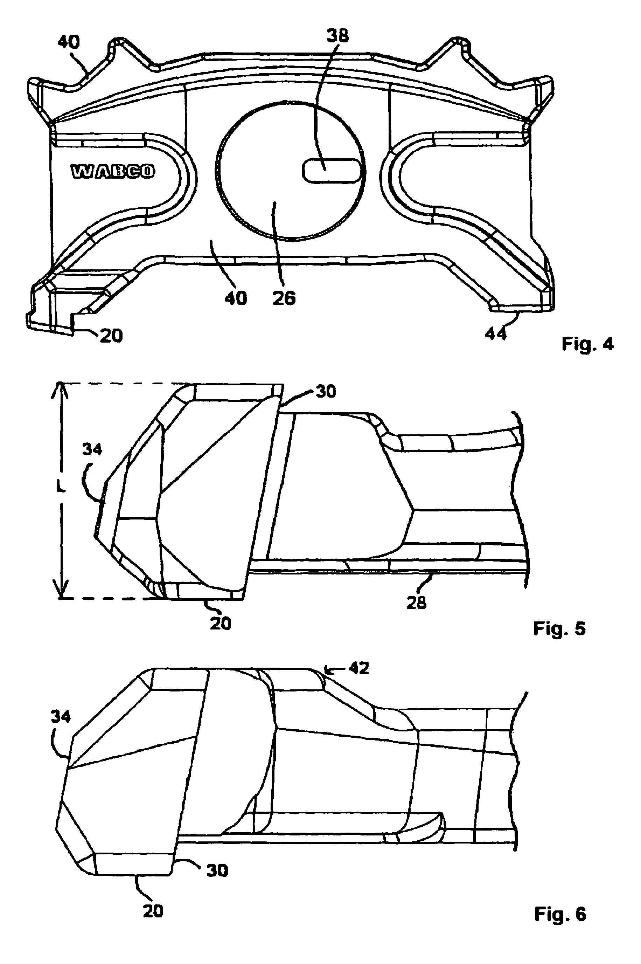

Der Krafteinleitungsbereich 26 ist flächenmäßig größer als die Stirnseite 24 des Zuspannelements 16. Dadurch ist eine gewisse Entkopplung der Druckplatte 14 von dem Zuspannelement 16 gewährleistet. Die Druckplatte 14 kann sich nämlich bezüglich des Zuspannelements 16 beispielsweise in Figur 4 in Links-Rechts-Richtung bewegen. Dadurch wird ebenfalls einem Verklemmen vorgebeugt.

Eine Drehbewegung der Druckplatte 14 bezüglich des Zuspannelements 16 bzw. umgekehrt ist aber durch eine Ausnehmung 38 in der Druckplatte unterbunden, in die ein entsprechender Stift oder dergleichen an dem Zuspannelement 16 eingreifen kann. Die Ausnehmung 38 hat die Form eines Langlochs, damit zwar eine Drehbewegung, nicht aber eine Links-Rechts-Bewegung (in Figur 4) unterbunden ist.

Alternativ zu der obigen Ausgestaltung kann auch vorgesehen sein, daß entgegen der Darstellung nach Figur 4 der Krafteinleitungsbereich 26 nicht von einer kreisrunden Kontur begrenzt ist, sondern vielmehr von einer von der Kreisform abweichenden Kontur, bei entsprechender Ausgestaltung des Zuspannelements 16, so daß ein Verdrehen der Druckplatte 14 bezüglich des Zuspannelements 16 durch reinen Formschluß zwischen den beiden genannten Konturen erreicht wird.

Die Druckplatte 14 ist erfindungsgemäß besonders dünn ausgestaltet, insbesondere in dem Krafteinleitungsbereich 26. Damit sie aber dennoch die notwendige Biegesteifigkeit hat, weist sie einen Versteifungsansatz auf, der in der Ansicht nach Figur 4 in etwa die Kontur eines Ambosses oder eines "x" hat, wobei der Krafteinleitungsbereich 26 ausgenommen ist. Dieser Verstärkungsansatz ist mit der Bezugszahl 40 bezeichnet.

Im Gegensatz zu der Ausgestaltung nach Figur 5 ist bei der Ausgestaltung nach Figur 6 eine Materialandickung 42 in einem an den Stützfuß 20 angrenzenden Bereich vorgesehen. Dadurch erhöht sich insbesondere die Steifigkeit des Stützfußes 20. Darüber hinaus wird die Kerbwirkung in diesem besonders beanspruchten Bereich verringert.

Die in der Zeichnung dargestellte Ausführungsform der erfindungsgemäßen Druckplatte weist noch einen weiteren Stützfuß 44 auf, an dem ebenfalls eine Führungsleiste ausgebildet sein kann. Bei entsprechender Ausgestaltung des Stützfußes 44 kann die Druckplatte 14 sowohl in rechtsseitig im Fahrzeug eingebauten Bremsen als auch in linksseitig im Fahrzeug eingebauten Bremsen eingesetzt werden.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Druckplatte zum Übertragen einer Zuspannkraft von einer Zuspanneinrichtung (16) auf einen Bremsbelag (12) einer Scheibenbremse, mit
einem Krafteinleitungsbereich (26), in dem die Zuspannkraft in die Druckplatte (14) eingeleitet wird,
einem Kraftableitungsbereich (28), in dem Zuspannkraft an den Bremsbelag (12) abgeleitet wird, und
einer ersten Drehsicherungseinrichtung (30) zum Sichern der Druckplatte (14) gegen ein Mitdrehen mit der Bremsscheibe (18) bei Vorwärtsbremsung,
**dadurch gekennzeichnet, daß**
die wirksame Hebellänge (L) der ersten Drehsicherungseinrichtung (30) parallel zur Bremsscheibenachse größer ist als der Abstand des Krafteinleitungsbereichs (26) vom Kraftableitungsbereich (28) parallel zur Bremsscheibenachse.

2. Druckplatte nach Anspruch 1, **dadurch gekennzeichnet, daß** die erste Drehsicherungseinrichtung (30) auf der Scheibeneinlaufseite bei Vorwärtsbremsung liegt.

3. Druckplatte nach Anspruch 1 oder 2, **dadurch gekennzeichnet, daß** die erste Drehsicherungseinrichtung eine ebene Führungsfläche (30) aufweist.

4. Druckplatte nach Anspruch 3, **dadurch gekennzeichnet, daß** die Führungsfläche (30) mit der Bremsscheibenachse einen spitzen Winkel gegen den Bremsscheibeneinlauf bildet.

5. Druckplatte nach einem der vorangehenden Ansprüche, **dadurch gekennzeichnet, daß** sie bezüglich der Zuspanneinrichtung (16) in Richtung quer zur Bremsscheibenachse verschieblich ist.

6. Druckplatte nach einem der vorangehenden Ansprüche, **dadurch gekennzeichnet, daß** sie im Krafteinleitungsbereich (26) dünner ist als in mindestens einem anderen Bereich (40).

7. Druckplatte nach einem der vorangehenden Ansprüche, **dadurch gekennzeichnet, daß** ihre Dicke in einem der ersten Drehsicherungseinrichtung (30) unmittelbar benachbarten Bereich derart ist, daß die erste Drehsicherungseinrichtung (30) in Richtung der Bremsscheibenachse auf der der Zuspanneinrichtung (16) zugewandten Seite und/oder auf der dem Bremsbelag (12) zugewandten Seite übersteht.

8. Druckplatte nach Anspruch 7, **gekennzeichnet durch** eine Materialandickung (42) in dem der ersten Drehsicherungseinrichtung (30) unmittelbar benachbarten Bereich.

9. Druckplatte nach einem der vorangehenden Ansprüche, **dadurch gekennzeichnet, daß** die erste Drehsicherungseinrichtung (30) zumindest teilweise an einem Ansatz (20) auf der der Zuspanneinrichtung (16) zugewandten Seite ausgebildet ist.

10. Druckplatte nach einem der vorangehenden Ansprüche, **dadurch gekennzeichnet, daß** die erste Drehsicherungseinrichtung (30) zumindest teilweise an einem Ansatz (20) auf der dem Bremsbelag (12) zugewandten Seite ausgebildet ist.

11. Druckplatte nach einem der vorangehenden Ansprüche, **gekennzeichnet durch** eine zweite Drehsicherungseinrichtung (34) zum Sichern der Druckplatte (14) gegen ein Mitdrehen mit der Bremsscheibe (18) bei Rückwärtsbremsung, deren wirksame Hebellänge parallel zur Bremsscheibenachse kleiner als diejenige der ersten Drehsicherungseinrichtung (30) ist.

12. Druckplatte nach einem der vorangehenden Ansprüche, **gekennzeichnet durch** mindestens einen Versteifungsansatz (40) auf der der Zuspanneinrichtung (16) zugewandten Seite.

13. Druckplatte nach einem der vorangehenden Ansprüche, **gekennzeichnet durch** eine dritte Drehsicherungseinrichtung (38) zum Sichern der Druckplatte (14) gegen ein Verdrehen bezüglich der Zuspanneinrichtung (16).

14. Druckplatte nach Anspruch 13, **dadurch gekennzeichnet, daß** die dritte Drehsicherungseinrichtung eine Ausnehmung (38) aufweist.

15. Druckplatte nach Anspruch 14, **dadurch gekennzeichnet, daß** die Ausnehmung länglich ist.

16. Druckplatte nach einem der Ansprüche 13 bis 15, **dadurch gekennzeichnet, daß** die dritte Drehsicherungseinrichtung (38) eine Begrenzung des Krafteinleitungsbereichs (26) mit von der Kreisform abweichender Kontur aufweist.

17. Scheibenbremse mit einer Druckplatte (14) nach einem der vorangehenden Ansprüche.

18. Scheibenbremse nach Anspruch 17, **dadurch gekennzeichnet, daß** sie eine Einspindelbremse oder eine Zweispindelbremse ist.

19. Scheibenbremse nach Anspruch 17 oder 18, **dadurch gekennzeichnet, daß** sie eine Nutzfahrzeugbremse ist.

## Claims

1. Pressure plate for transmitting the clamping force from a clamping means (16) to the brake pad (12) of a disc brake, having:
a force introduction region (26) in which the clamping force is introduced into the pressure plate (14),
a force delivery region (28) in which the clamping force is delivered to the brake pad (12), and,
a first anti rotation means (30) for securing the pressure plate (14) against rotation with the brake disc (18) upon forwards braking,
**characterised in that**
the effective lever length (L) of the first anti rotation means (30) parallel to the brake disc axis is greater than the distance parallel to the brake disc axis of the force introduction region (26) from the force delivery region (28).

2. Pressure plate according to claim 1, **characterised in that** the first anti rotation means (30) is disposed on the side at which the disc enters upon forwards braking.

3. Pressure plate according to claim 1 or 2, **characterised in that** the first anti rotation means has a flat guide surface (30).

4. Pressure plate according to claim 3, **characterised in that** the guide surface (30) forms an acute angle with the brake disc axis against the brake disc entry.

5. Pressure plate according to one of the preceding claims, **characterised in that** it is displaceable relative to the clamping means (16) in the direction transverse to the brake disc axis.

6. Pressure plate according to one of the preceding claims, **characterised in that** it is thinner in the force introduction region (26) than in at least one other region (40)

7. Pressure plate according to one of the preceding claims, **characterised in that** its thickness in a region immediately neighbouring the first anti rotation means (30) is such that the first anti rotation means (30) projects, in the direction of the brake disc axis, beyond the side facing the clamping means (16) and/or beyond the side facing the brake pad (12).

8. Pressure plate according to claim 7, **characterised by** material thickening (42) in the region directly neighbouring the first anti rotation means (30).

9. Pressure plate according to one of the preceding claims, **characterised in that** the first anti rotation means (30) is constructed at least in part on an extension (20) on the side facing the clamping means (16).

10. Pressure plate according to one of the preceding claims, **characterised in that** the first anti rotation means (30) is constructed at least in part on an extension (20) on the side facing the brake pad (12).

11. Pressure plate according to one of the preceding claims, **characterised by** a second anti rotation means (34) for securing the pressure plate (14) against rotation with the brake disc (18) upon reversing braking, whose effective lever length parallel to the brake disc axis is smaller than that of the first anti rotation means (30).

12. Pressure plate according to one of the preceding claims, **characterised by** at least one stiffening extension (40) on the side facing the clamping means (16).

13. Pressure plate according to one of the preceding claims, **characterised by** a third anti rotation means (38) for securing the pressure plate (14) against rotation relative to the clamping means (16).

14. Pressure plate according to claim 13, **characterised in that** the third anti rotation means has a recess (38).

15. Pressure plate according to claim 14, **characterised in that** the recess is elongate.

16. Pressure plate according to one of claims 13 to 15, **characterised in that** the third anti rotation means (38) has the boundary of the force introduction region (26) departing from the circular contour.

17. Disc brake having a pressure plate (14) according to one of the preceding claims.

18. Disc brake according to claim 17, **characterised in that** it is a single spindle brake or a double spindle brake.

19. Disc brake according to claim 17 or 18, **characterised in that** it is a commercial vehicle brake.

## Revendications

1. Plateau de pression pour transférer une force d'application d'une installation d'application (16) à une garniture de frein (12) d'un frein à disque avec
une zone d'introduction de force (26) dans laquelle la force d'application est introduite dans le plateau de pression (14),
une zone d'évacuation de force (28), dans laquelle la force d'application est évacuée à la garniture de frein (12), et
une première installation de sécurité à l'encontre d'une rotation (30) pour assurer le plateau de pression (14) à l'encontre d'une co-rotation avec le disque de frein (18) lors d'un freinage avant,
**caractérisé en ce que**
la longueur de levier efficace (L) de la première installation de sécurité à l'encontre d'une rotation (30) parallèlement à l'axe du disque de frein est plus grande que l'écart de la zone d'introduction de force (26) de la zone d'évacuation de force (28) parallèlement à l'axe du disque de frein.

2. Plateau de pression selon la revendication 1, **caractérisé en ce que** la première installation de sécurité à l'encontre d'une rotation (30) se situe au côté entrée de disque lors d'un freinage avant.

3. Plateau de pression selon la revendication 1 ou 2, **caractérisé en ce que** la première installation de sécurité à l'encontre d'une rotation présente une face de guidage plane (30).

4. Plateau de pression selon la revendication 3, **caractérisé en ce que** la face de guidage (30) forme avec l'axe du disque de frein un angle aigu contre l'entrée du disque de frein.

5. Plateau de pression selon l'une des revendications précédentes, **caractérisé en ce qu'**il est déplaçable relativement à l'installation d'application (16) dans la direction transversalement à l'axe du disque de frein.

6. Plateau de pression selon l'une des revendications précédentes, **caractérisé en ce qu'**il est plus mince dans la zone d'introduction de force (26) que dans au moins une autre zone (40).

7. Plateau de pression selon l'une des revendications précédentes, **caractérisé en ce que** son épaisseur dans une zone avoisinant directement la première installation de sécurité à l'encontre d'une rotation (30) est telle que la première sécurité à l'encontre d'une rotation (30) fait saillie en direction de l'axe du disque de frein sur le côté orienté vers l'installation d'application (16) et/ou sur le côté orienté vers la garniture de frein (12).

8. Plateau de pression selon la revendication 7, **caractérisé par** un épaississement de matériau (42) dans la zone avoisinant directement la première installation de sécurité à l'encontre d'une rotation (30).

9. Plateau de pression selon l'une des revendications précédentes, **caractérisé en ce que** la première installation de sécurité à l'encontre d'une rotation (30) est réalisée au moins partiellement à un bout rapporté (20) sur le côté orienté vers l'installation d'application (16).

10. Plateau de pression selon l'une des revendications précédentes, **caractérisé en ce que** la première installation de sécurité à l'encontre d'une rotation (30) est réalisée au moins partiellement à un bout rapporté (20) sur le côté orienté vers la garniture de frein (12).

11. Plateau de pression selon l'une des revendications précédentes, **caractérisé par** une deuxième installation de sécurité à l'encontre d'une rotation (34) pour assurer le plateau de pression (14) contre une co-rotation avec le disque de frein (18) lors d'un freinage arrière, dont la longueur de levier efficace parallèlement à l'axe du disque de frein est plus petite que celle de la première installation de sécurité à l'encontre d'une rotation (30).

12. Plateau de pression selon l'une des revendications précédentes, **caractérisé par** au moins un bout rapporté de renforcement (40) sur le côté orienté vers l'installation d'application (16).

13. Plateau de pression selon l'une des revendications précédentes, **caractérisé par** une troisième installation de sécurité à l'encontre d'une rotation (38) pour assurer le plateau de pression (14) contre une rotation relativement à l'installation d'application (16).

14. Plateau de pression selon la revendication 13, **caractérisé en ce que** la troisième installation de sécurité à l'encontre d'une rotation présente un évidement (38).

15. Plateau de pression selon la revendication 14, **caractérisé en ce que** l'évidement est oblong.

16. Plateau de pression selon l'une des revendications 13 à 15, **caractérisé en ce que** la troisième installation de sécurité à l'encontre d'une rotation (38) présente une limitation de la zone d'introduction de force (26) d'un contour s'écartant de la forme circulaire.

17. Frein à disque avec un plateau de pression (14) selon l'une des revendications précédentes.

18. Frein à disque selon la revendication 17, **caractérisé en ce que** celui-ci est un frein à une vis ou un frein à deux vis.

19. Frein à disque selon la revendication 17 ou 18, **caractérisé en ce que** celui-ci est un frein de véhicule utilitaire.
